# EUROPEAN PATENT APPLICATION

(11) **EP 3 772 370 A1**
(43) Date of publication of application: **10.02.2021**
(21) Application number: 19190131.3
(22) Date of filing: 05.08.2019
(51) Int. Cl.: B01D 67/00, B01D 69/02, B01D 69/12, B01D 71/80

(54) **METHOD OF PRODUCING A POLYMERIC MEMBRANE**

(71) Applicant: Helmholtz-Zentrum Geesthacht Zentrum für Material- und Küstenforschung GmbH, 21502 Geesthacht (DE)
(72) Inventor: Rangou, Sofia, 21033 Hamburg (DE); Filiz, Volkan, 22763 Hamburg (DE); Lademann, Brigitte, 21493 Schwarzenbek (DE); Buhr, Kristian, 20253 Hamburg (DE)
(74) Representative: Uexküll & Stolberg

(57) **Abstract**

The present invention relates to a method of producing a polymeric membrane having a homogeneous porosity throughout the entire polymeric phase. The method comprises the steps of dissolving at least one amphiphillic block copolymer in a solvent to form a casting solution of the block copolymer, and contacting the extruded solution with non-solvent to induce phase separation and thereby producing an integral asymmetric polymeric membrane, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase.

## Description

### FIELD OF THE INVENTION

The present invention relates to a method of producing a polymeric membrane.

### BACKGROUND OF THE INVENTION

Membrane polymer science has grown over the past decades. See W.J. Koros et al. "Polymeric Membrane Materials for Solution-Diffusion Based Permeation Separations", Prog. Poly. Sci., Vol. 13, 339-401 (1988). However, only few of the developed polymers have proven to be useful for the production of membranes on a commercial scale, as many of the polymers do not meet with the requirements for their application in industrial processes. One criterion for usefulness of a polymer is its ability to form isoporous surfaces of micro- or nanopores, thus enabling selective separation. Among those suitable materials certain polyimides, cellulose acetate and certain poly(vinylidene fluoride) copolymers have be proven to be useful for the commercial production of membranes.

Most of the porous polymeric membranes are fabricated via phase separation methods, such as non-solvent induced phase separation (NIPS) and thermally induced phase separation (TIPS) methods. See N. Arahman et al. "The Study of Membrane Formation via Phase Inversion Method by Cloud Point and Light Scattering Experiment", AIP Conference Proceedings 1788, 030018 (2017), pages 030018-1-030018-7. Generally, a polymer solution is dissolved in a solvent (or a mixture of solvents) at room temperature for membrane preparation via NIPS process. Phase inversion is initiated via contact with non-solvent such as water or methanol, whereby the polymer solidifies to form the membrane selective layer.

Membranes known today are either formed as flat sheets, also referred to as integral asymmetric membranes, or as hollow fibres. For example, such membranes are known from J. Hahn et al. "Thin Isoporous Block Copolymer Membranes: It Is All about the Process", ACS Appl. Mater. Interfaces 2015, 7, 38, pages 21130-21137, US-Patent 6,024,872, published US patent application US 2017/0022337 A1, and EP 3 147 024 A1. The isoporous membranes exhibit an isoporous, selective surface, and a substructure which appears to exhibit a random inhomogeneous porosity and which does not affect the membrane separation performance.

In order to improve separation properties of polymeric membranes polymeric foams have been developed. See for example, E. Aram et al. "A review on the micro- and nanoporous polymeric foams: Preparation and properties", Int. J. of Polym. Mat and Poly, Biomat., Vol. 65, pages 358-375 (2018). Polymeric foams have as a unique feature the existence of an almost homogeneous porosity throughout the body of the material (three-dimensional porosity), which theoretically increases the selectivity throughout the membrane. Nevertheless, for the foaming of polymers high temperatures and pressures are required, and a gas such as CO₂ must be blown through the melt in order to achieve a desired porosity. It is known that not all polymers are able to undergo such procedure without damage.

Accordingly, there is still a need for methods and materials, which would enable the production of a membrane having a homogeneous porosity throughout the entire polymeric phase in a less demanding manner.

### SUMMARY OF THE INVENTION

In one embodiment the present invention relates to a method for producing a polymeric membrane comprising the steps of dissolving at least one amphiphillic block copolymer in a solvent or mixture of solvents to form a casting solution of the block copolymer, applying the solution as a layer on a support with a doctor blade at a predefined thickness, and contacting the solution layer with non-solvent to induce phase separation and thereby producing an integral asymmetric polymeric membrane, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase. In another embodiment of the invention, the amphiphillic block copolymer is a diblock copolymer containing vinylbenzocyclobutene units, such as 4-vinylbenzocyclobutene units. In still another embodiment, the amphiphillic block copolymer is a poly(4-vinylbenzocyclobutente)-block-poly(4-vinylpyri-dine) (PVBCB-b-P4VP) diblock copolymer.

### DEFINITIONS

In the context of the present invention the term *"porous membrane"* or *"porous, polymeric membrane"* is meant to designate polymeric films having an upper and lower surface and a film thickness connecting the respective upper and lower surfaces, which films exhibit two-dimensional, i.e. single-layer arrays of pores at last one film surface.

In *"integral asymmetric membranes",* the pores have a larger diameter inside the film with the top open at the film surface. The pores are termed macroporous or microporous, depending on their size, i.e. diameter. The term *"macroporous"* is meant to designate pores having a mean pore size as determined by electron microscopy in the range of from 50 nm to 10 µm, preferably from 1 µm to 2 µm. The term *"microporous"* is meant to designate pores having a mean pore size in the range of from 2 nm to less than 50 nm according to IUPAC (International Union of Pure and Applied Chemistry), K.S.W. Sing et al. "Reporting physisorption data for gas/solid systems with special reference to the determination of surface area and porosity", Pure Appl. Chem., 1985, 57, 603.

The term *"isoporous"* is meant to designate pores at the surface having a ratio of the maximum pore diameter to the minimum pore diameter, of at most 3, preferably at most 2. The pore sizes and pore size distribution can e.g. be determined by image analysis of images of the membrane surface obtained by microscopy such as electron microscopy. Scanning electron microscopy was used to obtain images of the surfaces and cuts through of the membranes depicted herewith, and the size and the distribution of the pores on the surface of the film were determined by using an imaging analysis software

The term *"polymeric membrane", "porous membrane"* or *"membrane"* as used herein is meant to designate porous films where the pores are connected to extend throughout the entire thickness of the membrane.

The term *"volatile"* is meant to designate solvents which are able to evaporate (it has a measurable vapour pressure) at processing temperatures.

The term *"carrier substrate"* or *"support substrate"* is meant to designate a flat sheet support or hollow fibre support, respectively, which is provided as a substrate onto which a casting solution is extruded in case of forming a membrane in flat sheet geometry, or which is formed from a "carrier solution" upon precipitation and which is enclosed by the hollow fibre membrane prepared according to the process of the invention. If desired, the carrier may be removed from the hollow-fibre membrane.

### DETAILED DESCRIPTION OF THE INVENTION

In an embodiment the invention relates to a method of producing a polymeric membrane in flat sheet geometry. The method comprises the steps of steps of dissolving at least one amphiphillic block copolymer in a solvent to form a casting solution of the block copolymer, extruding the casting solution onto a carrier substrate to form a film, evaporating a portion of the solvent near the surface during a standing period, and contacting the extruded solution with non-solvent to induce phase separation and thereby producing an integral asymmetric polymeric membrane in flat sheet geometry, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase.

Preferably, the polymer solution is applied to a substrate in flat sheet geometry by means of a doctor blade. The substrate material is preferably a material which does not react with the at least one amphiphilic block copolymer in a solvent, like a polymeric nonwoven or glass.

According to a preferred embodiment of the present invention, the casting solution is applied onto the substrate in a thickness ranging from 1 pm to 1000 pm, preferably from 50 pm to 500 pm, such as from 100 pm to 300 pm.

After the membrane has formed, the flat sheet polymer membrane may be wound to a second reel, optionally together with the substrate material. Prior to crosslinking the membrane may be unwound from the second reel or crosslinking may be performed prior to winding the membrane onto a reel.

In another embodiment the invention relates to a method of producing a polymeric membrane in hollow fibre geometry. The method comprises the steps of dissolving at least one amphiphillic block copolymer in a solvent to form a casting solution of the block copolymer, extruding the casting solution through a first annular die in a spinneret while simultaneously pressing a core gas stream through at least one orifice encircled by the first annular die and extruding a sheath liquid comprising at least one non-solvent through a second annular die encircling the first die into air, and contacting the extruded solution with non-solvent in a coagulation bath to induce phase separation and thereby producing an integral asymmetric polymeric membrane in hollow fibre geometry, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase. Exemplary method steps for producing an integral asymmetric polymeric membrane in hollow fibre geometry is disclosed in EP 3 147 024 A1.

Preferably, the gap between the spinneret and the coagulation bath, through which the extruded first polymer solution passes, has a length of between 1 cm and 50 cm. Furthermore, it is preferred that the carrier solution extruded through the second die comprises polyether sulfone (PES) in admixture with poly(ethylene glycol) (PEG), a methyl pyrrolidone, such as N-methyl-2-pyrrolidone (NMP) and/or water.

In still another embodiment the invention relates to an alternative method of forming a polymeric membrane in hollow fibre geometry. The method comprises the steps of dissolving at least one amphiphillic block copolymer in a solvent to form a casting solution of the block copolymer, providing a hollow fibre support membrane having a lumen surrounded by the support membrane, and coating and the inner surface thereof by first passing the casting solution through the lumen of the hollow fibre support membrane and along the inner surface thereof, thereafter pressing a core gas stream through the lumen of the coated hollow fibre membrane, and thereafter passing a non-solvent (precipitant) through the lumen of the coated hollow fibre membrane thereby producing an integral asymmetric polymeric membrane in hollow fibre geometry, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase. Exemplary method steps for producing an integral asymmetric polymeric membrane in hollow fibre geometry are disclosed in WO 2019/020278 A1.

According to an aspect of the invention the crosslinking step does not require any catalyst and does not release molecules. The following scheme illustrates the assumed thermal crosslinking step when the amphiphillic block copolymer is a poly(4-vinylbenzocyclobutente)-block-poly(4-vinylpyri-dine) (PVBCB-b-P4VP) diblock copolymer.

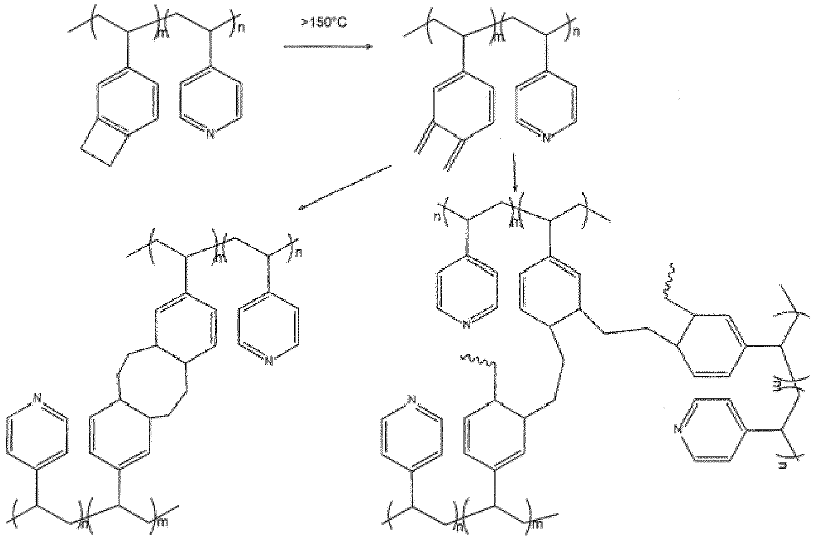

The crosslinking of this kind of polymer starts at a temperature of about 180°C, which could be confirmed via differential calorimetry. Likewise crosslinking can be initiated via application of radiation such as UV-light radiation.

According to another aspect the present invention relates to a method of separating a fluid stream into a permeate stream and a retentate stream using a polymeric membrane manufactured by any of the methods described hereinbefore. The fluid stream may be a liquid stream and/or a gaseous stream, the latter in particular after the filling of the pores with an adequate media, e.g. ionic liquids.

The invention is further described in an exemplary manner by means of the following example which shall not be construed as limiting the invention.

### EXAMPLE

The block copolymers used in the present examples is a poly-(4-vinylbenzocyclobutene)-b-poly(4-vinylpyridine) (PVBCB-b-P4VP) . In particular the sample nomenclature PVBCB₇₉P4VP₂₁^{108k} attributes PVBCB to poly (4-vinylbenzocyclobutene), P4VP abbreviation for poly(4-vinylpyridine), subscripts the weight percentage of each block in the polymer and the number following is attributed to the total molecular weight in kg/mol.

The block copolymers were synthesized via anionic polymerization. All monomers and solvents were purified prior to reach the standards required for anionic polymerization. The polymerization procedure was conducted as follows: A 250 mL glass reactor was connected to a vacuum line and evacuated to attain high vacuum. Subsequently purified THF was distilled into the reactor and titrated under argon at -80°C, by a small amount of sec-butyl-lithium (sec-BuLi), until a vivid yellow colour was observed. Upon the disappearance of the colour the reactor was cooled again to a temperature of -80°C and the first purified monomer 4-vinylbenzocyclobutene (4-VBCB 2.213 g, 0.023 mol) was inserted via a syringe into the reactor, followed by the initiator sec-BuLi (0.28 M in cyclohexane, 0.08 mL, 0.000 022 mol).

The polymerization solution immediately developed a bright orange colour indicating the formation of a propagating anion of 4-VBCB and the reaction was left to complete for 1h at -80°C. After the reaction was completed an aliquot was withdrawn and the second purified monomer 4-vinylpyridine (4-VP, 0.5399 0.0056 mol) was inserted into the polymerization reactor. At this point, the solution colour changed rapidly to light yellow-green indicating the propagation of the 4VP block. The polymerization was left to complete overnight, and on the following day it was terminated with vacuum degassed methanol (0.5 mL).

The diblock copolymer was recovered by precipitation in hexane and dried under vacuum at 50°C for 48 h. The yield was 96% (2.75 g). The molecular characteristics of the diblock copolymer were determined by the GPC measurements using chloroform as solvent and applying PS standards, as well as by ¹H-NMR in CDCl₃. The total molecular weight of the polymer was calculated as 108 kg/mol and the amount of PVBCB blocks was determined to be 79 wt.% and of the P4VP blocks 21 wt.%.

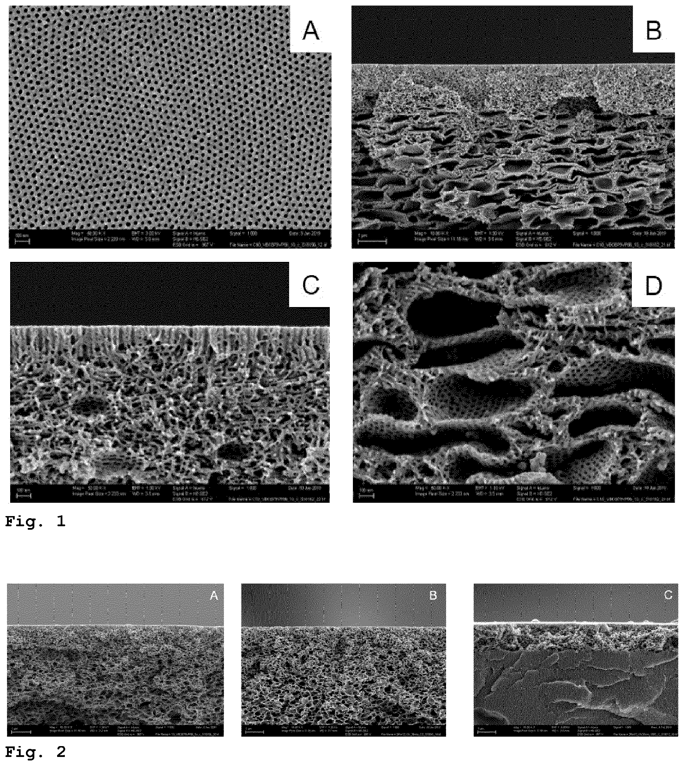

For the preparation of the membrane casting solution and subsequent membrane casting, the block copolymer PVBCB₇₉P4VP₂₁^{108k} was dissolved in a mixture of dimethylformamide, dioxane and tetrahydrofurane, providing a viscous, but clear solution. The composition of the casting solution was 20 wt.% PVBCB-b-P4VP, 36 wt.% tetrahydrofurane (THF), 36 wt% dioxane (DIOX) and 8 wt.% dimethylformamide (DMF). The casting solution was extruded onto a polyester nonwoven support using a doctor blade with a gap height adjusted to 200 pm. After 10 seconds, the film was immersed in a water bath (non-solvent). Drying of the membrane followed at 60°C under vacuum. Figures 1A to 1D present the images obtained via scanning transmission electron microscopy (SEM). Figure 1A shows that hexagonal pores, approximately 25 nm (± 3 nm) in size have formed on the membrane surface. Figures 1B and 1D show that within the membrane body cavities have formed, having the same porosity as the membrane surface. Pure water flux experiments revealed a relative low but constant flux from these membranes. The pure water, although it is forced to pass through the porous walls of the cavities, finds a higher resistance, which leads to lower flux values. Accordingly, the membrane performance was depended from the porosity of the membrane body as well. Figure 1C shows that the pores of the selective layer are cylindrical and have a length of approximately 150-200 nm. The pores of the cavities appear to be 20 nm in length.

Further images - not shown here - demonstrate a structural gradient of the comonomers, like in all typical integrally-skinned asymmetric membranes, which structural gradient results from a very high polymer concentration membrane at the onset of phase separation.

The polymers were then subjected to crosslinking. Differential calorimetry measurements suggest that crosslinking starts at a temperature of about 180°C and higher. An alternative source for successful crosslinking is UV-irradiation. Figure 2 shows images of from the cross sections of another PVBCB₇₉P4VP₂₁^{108K} membrane before and after crosslinking. The membrane was cast from a 19 wt% solution with a solvent weight composition DMF/THF/DIOX - 10/45/45 wt%. Image A depicts cross section of the integral asymmetric membrane. Image B depicts the cross section of the membrane after crosslinking with UV irradiation for 30 minutes. Image C depicts the cross section of the UV irradiated membrane after subsequent heating at 180°C for 15 minutes.

The figures show that upon crosslinking the cavities are closed leading to a membrane structure having a homogeneous porosity throughout the entire polymeric phase.

## Claims

1. A method for producing a polymeric membrane comprising the steps of dissolving at least one amphiphillic block copolymer in a solvent to form a casting solution of the block copolymer, extruding the casting solution through a die and contacting the extruded solution with non-solvent to induce phase separation and thereby producing an integral asymmetric polymeric membrane, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase.

2. The method of claim 1 wherein the amphiphillic block copolymer is a diblock copolymer containing vinylbenzocyclobutene units.

3. The method of claim 1 wherein the amphiphillic block copolymer is a diblock copolymer containing 4-vinylbenzocyclobutene units.

4. The method of claim 1 wherein the amphiphillic block copolymer is a poly(4-vinylbenzocyclobutente)-block-poly(4-vinylpyridine) diblock copolymer.

5. The method of any of the preceding claims wherein the casting solution is extruded through a rectangular die onto a substrate to produce a polymeric membrane in flat sheet geometry.

6. The method of claim 5, wherein the substrate is provided as a first reel of substrate material, which is unwound prior to applying the casting solution into the carrier.

7. The method of claim 6, wherein the flat sheet polymer membrane is wound to a second reel, optionally together with the substrate material, after the integral asymmetric membrane has formed.

8. The method of any of claims 1 to 4 wherein the casting solution is extruded through an annular die to produce a polymeric membrane in hollow fibre geometry.

9. The method of claim 8 comprising the steps of dissolving at least one amphiphillic block copolymer in a solvent to form a casting solution of the block copolymer, extruding the casting solution through a first annular die in a spinneret while simultaneously pressing a core gas stream through at least one orifice encircled by the first annular die and extruding a sheath liquid comprising at least one non-solvent through a second annular die encircling the first die into air, and contacting the extruded solution with non-solvent in a coagulation bath to induce phase separation and thereby producing an integral asymmetric polymeric membrane in hollow fibre geometry, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase

10. The method of claim 8 comprising the steps of dissolving at least one amphiphillic block copolymer in a solvent to form a casting solution of the block copolymer, providing a hollow fibre support membrane having a lumen surrounded by the support membrane, and coating and the inner surface thereof by first passing the casting solution through the lumen of the hollow fibre support membrane and along the inner surface thereof, thereafter pressing a core gas stream through the lumen of the coated hollow fibre membrane, and thereafter passing a non-solvent (precipitant) through the lumen of the coated hollow fibre membrane thereby producing an integral asymmetric polymeric membrane in hollow fibre geometry, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase.

11. The method of any of claims 5 to 7 comprising the steps of dissolving at least one amphiphillic block copolymer in a solvent to form a casting solution of the block copolymer, extruding the casting solution onto a carrier substrate to form a film, evaporating a portion of the solvent near the surface during a standing period, and contacting the extruded solution with non-solvent to induce phase separation and thereby producing an integral asymmetric polymeric membrane in flat sheet geometry, wherein the amphiphillic block copolymer is a diblock copolymer containing benzocyclobutene units, and wherein the integral asymmetric polymeric membrane is crosslinked by application of heat or radiation thereby producing a membrane having a homogeneous porosity throughout the entire polymeric phase.

12. A method of separating a fluid stream into a permeate stream and a retentate stream using a polymeric membrane manufactured a methods of any of claims 1 to 11.

13. The method of claim 12, wherein the fluid stream is a liquid stream and/or a gaseous stream.
